# EUROPEAN PATENT SPECIFICATION

(11) **EP 0 799 869 B1**
(45) Date of publication and mention of the grant of the patent: **11.08.1999**
(21) Application number: 97302290.8
(22) Date of filing: 03.04.1997
(51) Int. Cl.: C09D 5/02, C09D 7/12

(54) **Aqueous coating agent for forming lubricating films**
Wässriges Überzugsmittel zur Erzeugung von Schmierfilmen
Agent de revêtement aqueux apte à former des films lubrifiants

(30) Priority: 03.04.1996 JP 10625996
(43) Date of publication of application: 08.10.1997
(73) Proprietor: Dow Corning Asia, Ltd., Tokyo 100 (JP)
(72) Inventor: Ikezawa, Atsushi, Dow Corning Asia, Ltd., Chiyoda-ku, Tokyo 100 (JP); Yamaguchi, Tetsuji, Dow Corning Asia, Ltd., Chiyoda-ku, Tokyo 100 (JP)
(74) Representative: Lewin, John Harvey

(56) References cited:
- EP-A- 0 132 716
- PATENT ABSTRACTS OF JAPAN vol. 009, no. 028 (C-264), 6 February 1985 & JP 59 174699 A (KOBE SEIKOSHO KK), 3 October 1984,

## Description

The present invention relates to an aqueous coating agent for forming lubricating films, in particular, to an aqueous coating agent for forming lubricating films suitable for prolonged use on sliding members of torque-transmitting parts utilized in automobile drive and prime mover systems.

Conventional aqueous coating agents for forming lubricating films, in particular those for use with sliding parts, comprise substances which possess excellent oil-proof and heat-resistant properties and are formed by dispersing molybdenum disulfide, graphite powder or carbon fibers in binders such as a polyimide resin, an epoxy resin, or a phenol resin.

Although aforementioned coating agents for forming lubricating films in an aqueous-system form are known as well, in the majority of cases such coating agents are based on organic solvents. For example, in their earlier patent application (Japanese Laid-Open Patent Application Kokai 6-200275) the authors of the present patent application utilize an organic solvent.

Recently, however, more strict requirements were imposed concerning environment protection and reducing the impact on human health. For this reason, many industries had to quickly switch from organic solvent systems to aqueous systems.

For the same reason, there is a strong demand for aqueous systems exists also in the field of coating agents for forming lubricating films. An example of such a water-based coating agent for forming lubricating films is disclosed in Japanese Laid-Open Patent Application Kokai 7-11088 wherein silica is used as an agent for imparting lubricating properties. However, this aqueous coating agent for forming lubricating films appears to be unsuitable for prolonged use on sliding members of torque-transmitting parts utilized in automobile drive and prime mover systems.

The present invention is aimed at elimination of the problems of the prior art, and it is an object of the present invention to provide an aqueous coating agent for forming lubricating films with improved lubricating properties, long-service life, in particular, on sliding members of torque-transmitting parts utilized in automobile drive and prime mover systems, and excellent load-bearing properties.

The present invention is characterized by the fact that, in an aqueous coating agent for forming lubricating films, a number of specific solid lubricating agents is used in a specific weight ratio range, and that the aforementioned solid lubricating agents is used in a specific weight ratio with regard to a hydrophilic resin.

In other words, the problems inherent in the prior art are solved by utilizing an aqueous coating agent for forming lubricating films that comprises the following first component, second component, and third component: the first component: a hydrophilic resin;

the second component: a solid lubricating agent comprising MoS₂ and at least one antimony sulfide selected from the group consisting of Sb₂S₃ and Sb₂S₅, where the weight ratio of MoS₂ to antimony sulfide is from 1:0.05 to 1:1.2; and the third component is water. The weight ratio of the second component to the first component is from 0.7 to 3.

The invention will be further described with reference to practical embodiments.

Although there are no special limitations with regard to the hydrophilic resin which is the aforementioned first component, it is recommended that it be a hydrophilic organic resin. What is meant here under by term "hydrophilic properties" is that the aforementioned organic resin is either soluble in water, or is at least stable in it in a dispersed form. An organic resin with aforementioned hydrophilic properties is a resin which normally has in its molecule a hydrophilic polar group. The following are examples of hydrophilic polar groups:

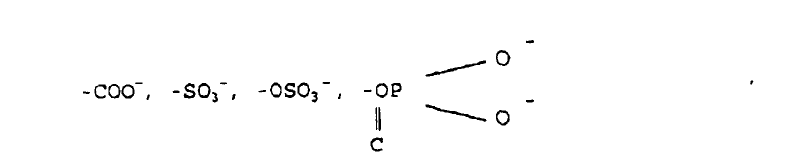

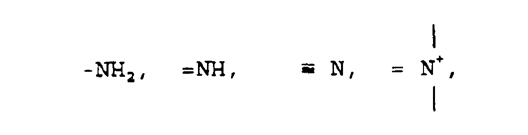

-OH-, -O-, -CN, -CONH₂.

Furthermore. it is possible to utilize organic resins which do not possess the aforementioned hydrophilic properties, such as epoxy resins, alkyd resins, acrylic resins, and silicone resins, provided their hydrophilic properties have been improved. Such an improvement can be achieved, e.g., by: (1) imparting hydrophilic properties as a result of graft polymerization or copolymerization of a monomer having a hydrophilic group capable of imparting hydrophilic properties to an organic resin which has no hydrophilic properties; or (2) introducing the hydrophilic group itself to an organic resin without hydrophilic properties as a result of amination, hydroxylation, carboxylation, or esterification. Especially preferable is an epoxy ester obtained by esterifying a hydroxyl group of an epoxy resin with linseed oil, dehydrated castor oil, soybean oil, and coconut oil, and the like.

It is recommended that the solid lubricating agent which is the aforementioned second component be represented by MoS₂ and at least one antimony sulfide selected from the group consisting of Sb₂S₃ and Sb₂S₅, where the weight ratio of MoS₂ to antimony sulfide is from 1:0.05 to 1:1.2. If the solid lubricating agent component does not contain both the aforementioned antimony sulfide and MoS₂, it would be impossible to obtain an aqueous coating agent for the formation of lubricating coating films with load-carrying capacity, which is an object of the present invention. The solid lubricating agent of the second component may comprise more than one of the aforementioned antimony sulfide. Furthermore, even though the aforementioned component contains both the antimony sulfide and MoS₂ but their weight ratio is beyond the range of 1:0.05 to 1:1.2, it would be still impossible to obtain an aqueous coating agent for the formation of lubricating coating films with properties specified by the present invention. For example, if MoS₂ is used in an excessive amount, the period of time during which the coating film preserves its lubricating properties (i.e., the service life) will be shortened, and if the antimony sulfide is used in an excessive amount, the coating film will have insufficient load-bearing capacity, and will acquire an increased coefficient of friction. This, in turn, will lead to heating during the use, and finally to thermal decomposition of the coating film and to a decrease in its service life. For the above reasons, it is recommended that a weight ratio of MoS₂ to antimony sulfide be from 1:0.2 to 1:0.5.

MoS₂ and antimony sulfide are indispensable components, but other solid lubricating agents also may be added provided their types and quantities are not detrimental to the object of the invention. An example of such a solid lubricating agent is Sb₂O₃ which is used in a weight ratio to the antimony sulfide which is from 1:0.5 to 1:5.0, preferably within the range of 1:0.5 to 1:1.5. The presence of this additive further improves lubricating properties. The use of aforementioned Sb₂O₃ in an excessive weight ratio beyond the specified range, on contrary, will decrease the service life of the lubricant.

A weight ratio of the second component to the first component, i.e., the weight of the solid lubricating agent to the weight of the hydrophilic resin (hereinafter referred to as a "PB ratio") should be from 0.7 to 3. The most preferable PB ratio is within the range of 0.9 to 2.5.

If the PB ratio is beyond the range of 0.7 to 3, e.g., if the solid lubricating agent is used in an excessive amount so that the aforementioned PB ratio exceeds 3, the strength of the coating film will be reduced and the service life of the lubricant will be shortened. Moreover, this will reduce anticorrosive properties to the level unsuitable for practical use. If, on the other hand, the hydrophilic resin is used in an excessive amount so that the PB ratio becomes lower than 0.7, it would be impossible to obtain a lubricating coating film with lubricating properties suitable for practical application.

There are no special limitations with regard to the amount of water, which is the aforementioned third component, provided it is used within the range that ensures obtaining of the aqueous coating agent for the formation of lubricating films with characteristics that satisfy the object of the invention.

Furthermore, in order to improve compatibility between water and the aforementioned hydrophilic resin, an agent that improves compatibility of the hydrophilic resin for water can be added to the aqueous coating agent of the present invention for forming lubricating films. The use of such an agent provides more efficient dissolving of the hydrophilic resin in water and stabilizes dispersion of this resin in water. Moreover, the use of such an agent broadens the assortment of types of hydrophilic resins suitable for the purposes of the present invention. As a result, e.g., less expensive hydrophilic resins can be selected. The aforementioned compatibility agent may be represented by water-soluble amines, NaOH, or the like. A preferable one is ethanolamine. Nevertheless, there are no special limitations with regard to the type of the compatibility agent, provided it ensures compatibility of the hydrophilic resin used for the purposes of the present invention with water.

The aqueous coating agent of the present invention may be combined with other additives such as dyes, anti-corrosive agents, heat-resistance improvers, and the like. Furthermore, the aqueous coating agent of the present invention may be combined small amounts of graphite, tungsten disulfide, boron nitride, mica, or other solid lubricants, provided they are not detrimental to the effect of the invention.

The aqueous coating agent of the invention for forming lubricating films may be prepared by different methods. One example of these methods is given below.
(1) Water (total quantity), a hydrophilic resin (30% of the entire -charge), and a compatibility agent (total quantity) are mixed and stirred, until the hydrophilic resin is dissolved in water.
(2) One third (1/3) of the total amount of solid lubricating agents and other additives are loaded and treated for 30 minutes in a mill. This operation is repeated three times until the entire quantity of the aforementioned components is loaded.
(3) The remainder of the entire amount of the hydrophilic resin is loaded, and the mixture is treated in a mill for 10 minutes.

### EXAMPLES

The invention will be further described in detail with reference to practical and comparative examples. In the following practical and comparative examples, the FALEX Pin And Vee Block Test Machine was used. The outer surfaces of the pin and V-block of this machine were subjected to sand blasting, and after treating with a phosphoric acid Mn₃(PO₄)₂, the contact surface of the pin was coated by spraying with an appropriate coating agent. The coating was dried and cured by heating. The so-called Falex Endurance Life was then measured as a time till tearing or scoring on the surface of the solidified coating under the following contact conditions: linear contact; frequency of rotation 290 rpm; sliding speed 0.096 m/sec; and compressive force 1000 Lbs.

The coating film used in the aforementioned experiment was obtained by drying an 8 to 13 µm thick coating film, formed by applying an appropriate coating agent, for 30 minutes at 25°C with subsequent curing for 1 hour at 200°C.

### Practical Example 1

In Practical Examples 1-1 to 1-6, the Falex Endurance Life was determined for aqueous coating agents suitable for forming lubricating films. Tests were carried out with the use of the aforementioned FALEX testers and the test procedure. The results are shown in Tables 1, 2, and 3.

Practical Examples 1-1, 1-3, 1-4, 1-5, and 1-6 show the effect exerted on the FALEX Endurance Life by the addition of at least one type of antimony sulfide selected from the group consisting of Sb₂S₃ and Sb₂S₅. Practical Example 1-2 shows an effect produced by adding Sb₂O₃ to the aforementioned antimony sulfides.

As can be seen from the results of the tests given in Tables 1 to 4, the addition of at least one type of an antimony sulfide, selected from the group consisting of Sb₂S₃ and Sb₂S₅, to a lubricating-film-forming coating composition consisting of a hydrophilic resin and MoS₂, makes it possible to obtain a very high Falex Endurance Life.

In particular, the Falex Endurance Life was especially high with further addition of Sb₂O₃ to the aforementioned antimony sulfides.

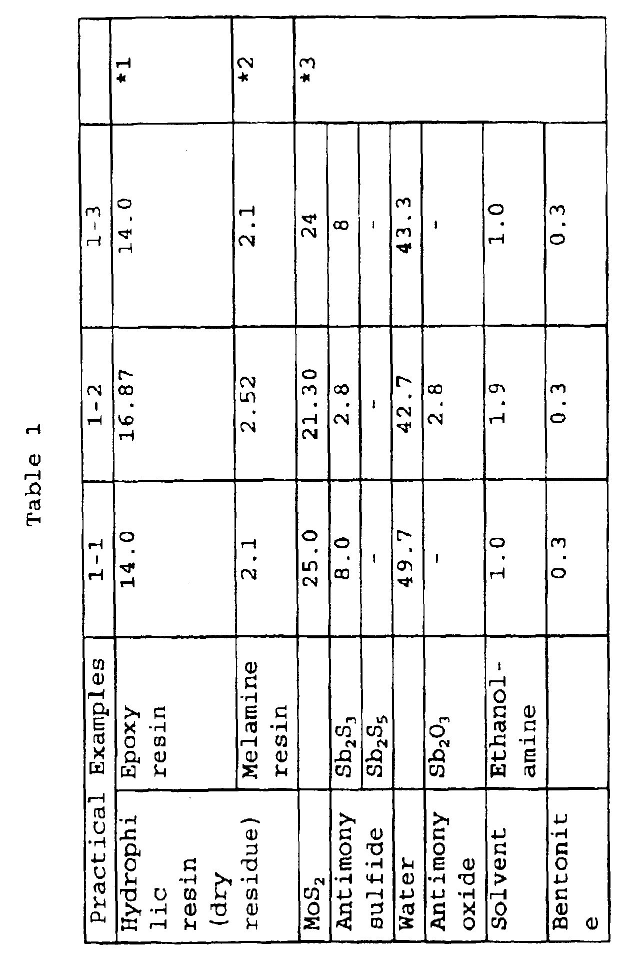

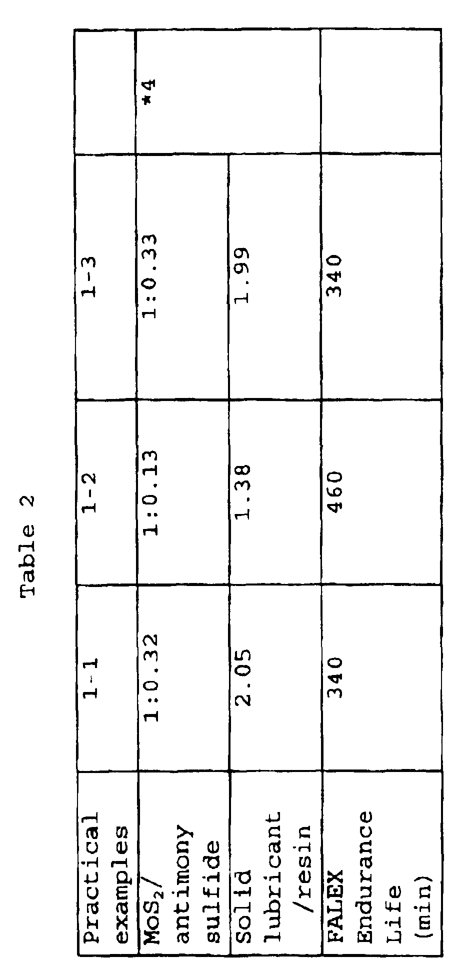

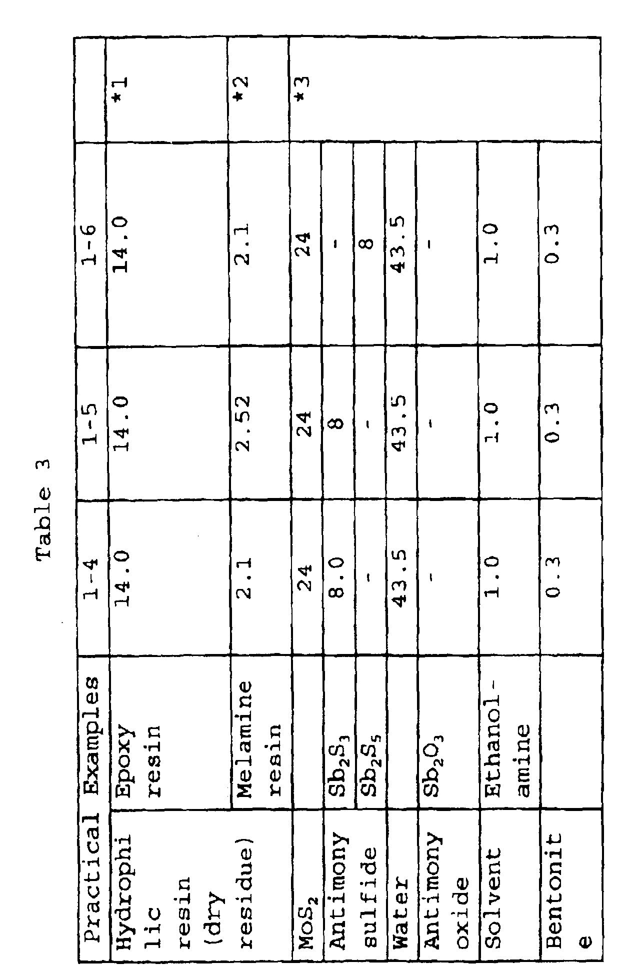

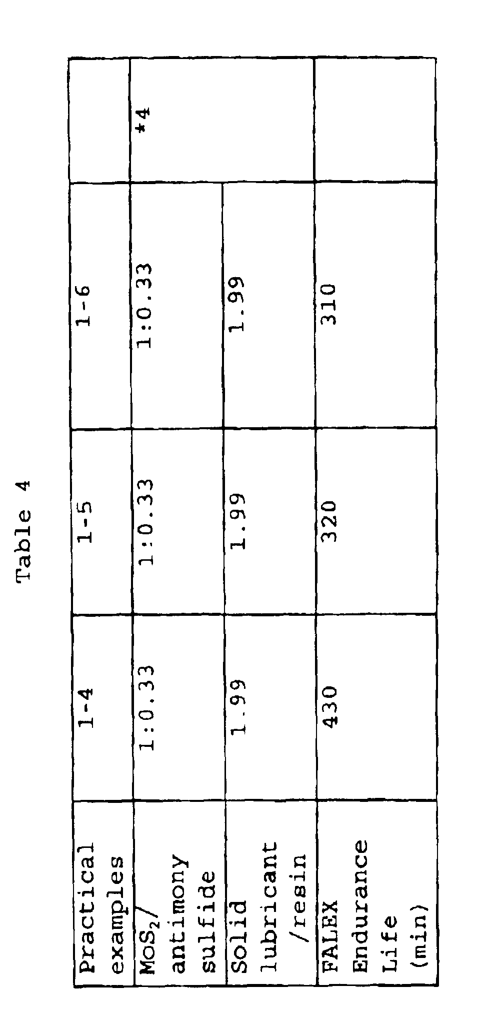

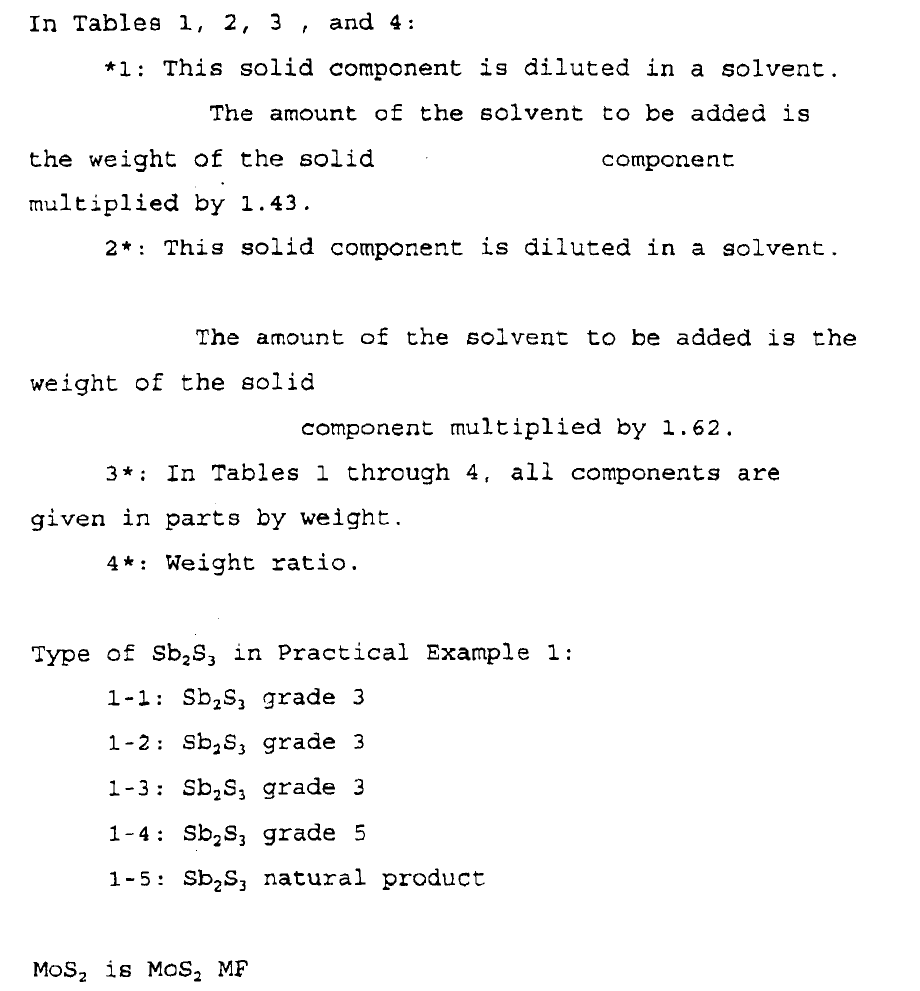

### Practical Example 2

The FALEX Endurance Life was determined by the same method as in Practical Example 1, with the exception that in Practical examples 2-1 to 2-11 the aqueous lubricating-film-forming agents were used with different weight ratios of solid lubricating agents to resins. The results are shown in Tables 5 to 8.

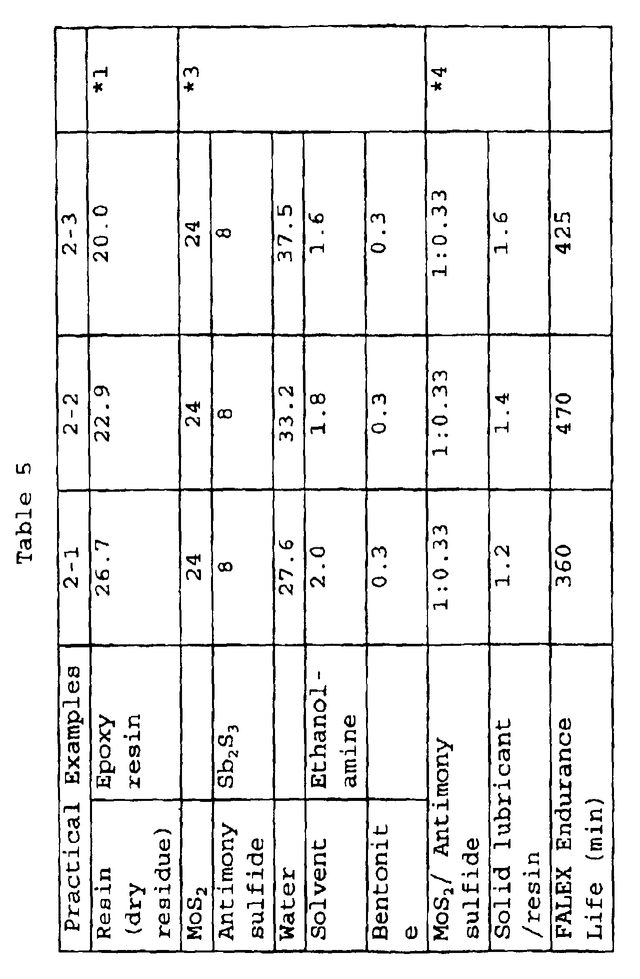

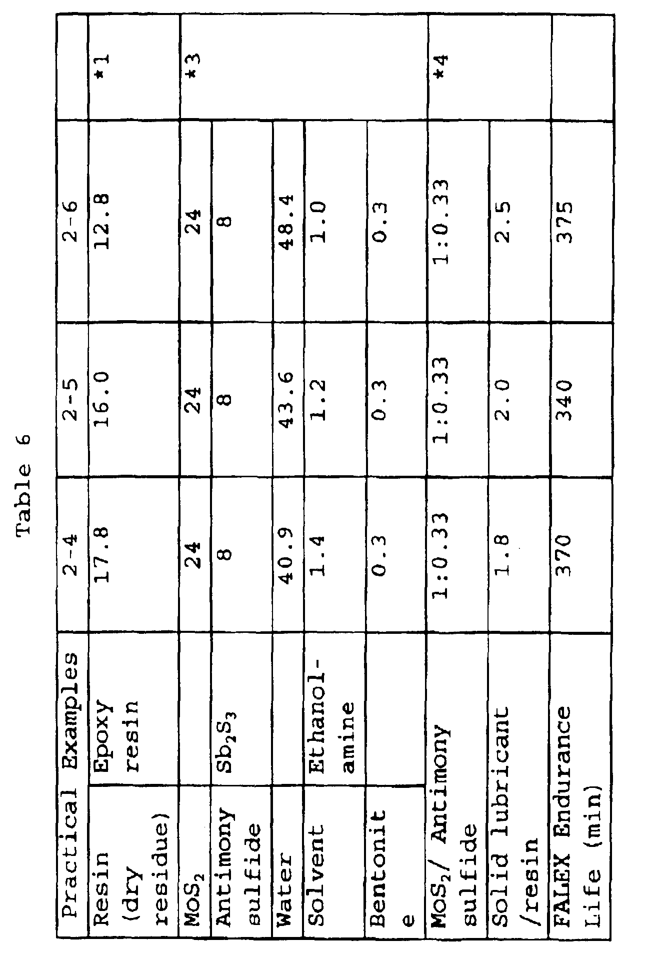

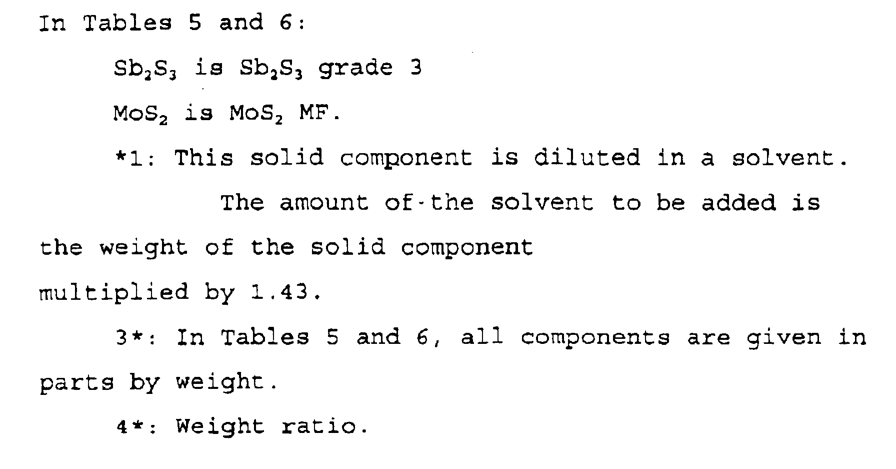

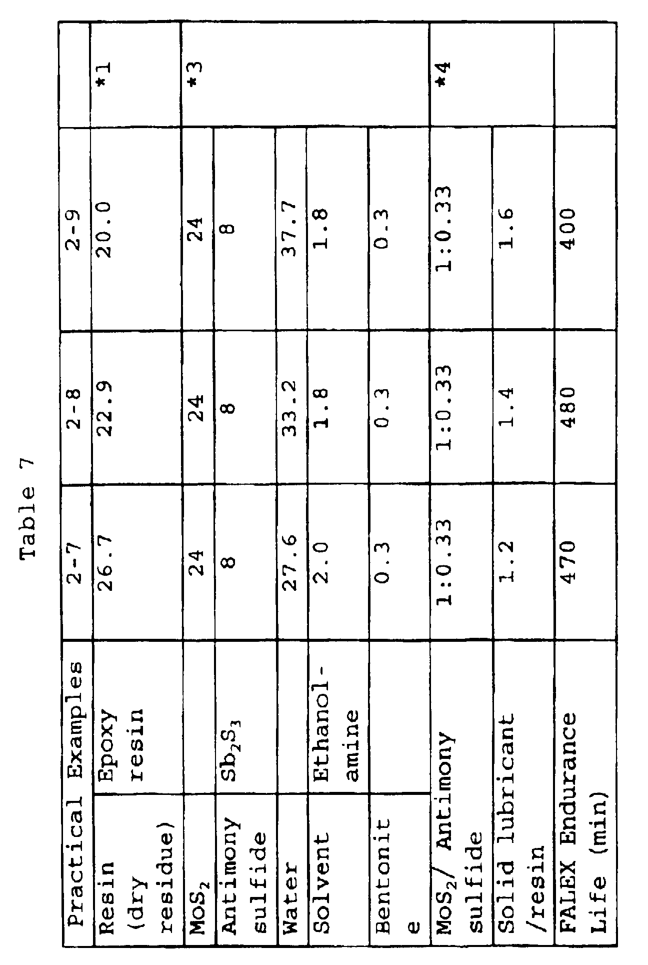

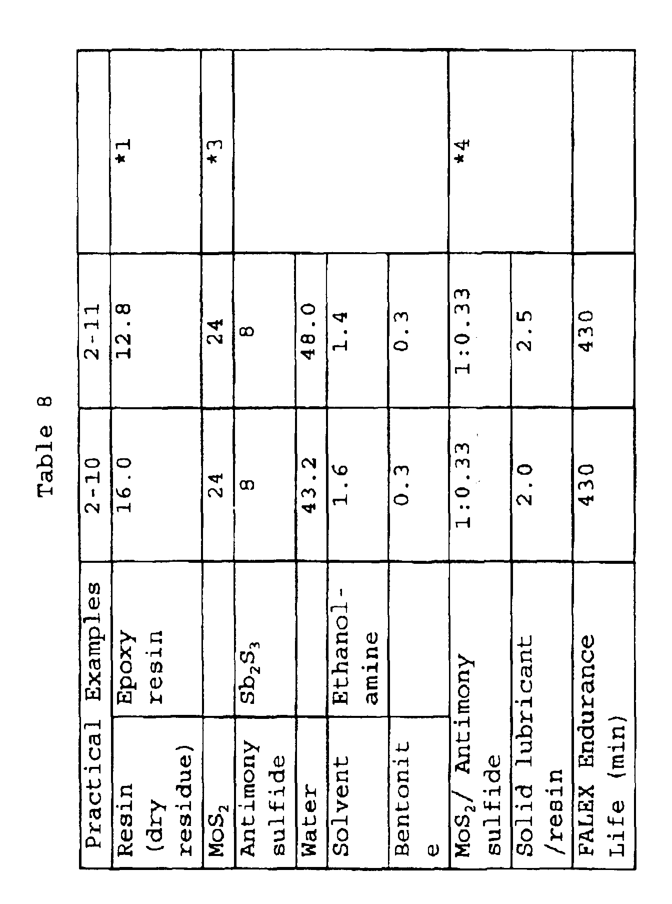

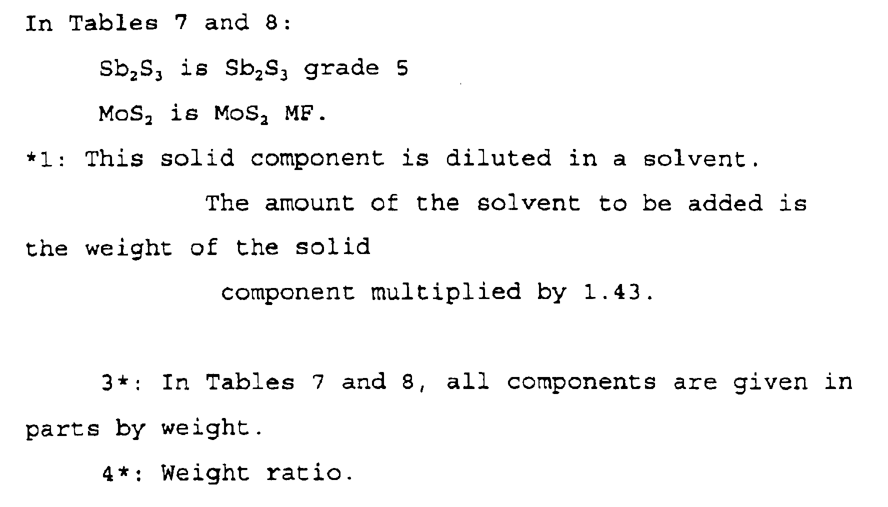

### Practical Example 3

The FALEX Endurance Life was determined by the same method as in Practical Example 1, with the exception that in Practical Examples 3-1 to 3-4 the aqueous lubricating-film-forming agents were used with different weight ratios of MoS₂ to Sb₂S₃. The results are shown in Tables 9 and 10.

**Table 9**

| Practical Examples | | 3-1 | 3-2 | |
|---|---|---|---|---|
| Resin (dry residue) | Epoxy resin | 19.9 | 19.9 | *1 |
| | Melamine resin | 3.0 | 3.0 | *2 |
| MoS₂ | | 28.8 | 25.6 | *3 |
| Antimony sulfide | Sb₂S₃ | 3.2 | 6.4 | |
| Water | | 42.9 | 42.9 | |
| Solvent | Ethanolamine | 1.9 | 1.9 | |
| Bentonite | | 0.3 | 0.3 | |
| MoS₂/ Antimony sulfide | | 1:0.11 | 1:0.25 | *4 |
| Solid lubricant /resin | | 1.4 | 1.4 | |
| FALEX Endurance Life (min) | | 380 | 460 | |

**Table 10**

| Practical Examples | | 3-3 | 3-4 | |
|---|---|---|---|---|
| Resin (dry residue) | Epoxy resin | 19.9 | 19.9 | *1 |
| | Melamine resin | 3.0 | 3.0 | *2 |
| MoS₂ | | 24 | 22.4 | *3 |
| Antimony sulfide | Sb₂S₃ | 8.0 | 9.6 | |
| Water | | 42.9 | 42.9 | |
| Solvent | Ethanolamine | 1.9 | 1.9 | |
| Bentonite | | 0.3 | 0.3 | |
| MoS₂/ Antimony sulfide | | 1:0.33 | 1:0.42 | *4 |
| Solid lubricant /resin | | 1.4 | 1.4 | |
| FALEX Endurance Life (min) | | 480 | 470 | |

| | | | | |
|---|---|---|---|---|
| In Tables 9 and 10: *1: This solid component is diluted in a solvent. The amount of the solvent to be added is the weight of the solid component multiplied by 1.43. | | | | |
| *2: This solid component is diluted in a solvent. The amount of the solvent to be added is the weight of the solid component multiplied by 1.62. | | | | |
| 3*: In Tables 9 and 10, all components are given in parts by weight. | | | | |
| 4*: Weight ratio. Sb₂S₃ is Sb₂S₃ grade 3 MoS₂ is MoS₂ MF. | | | | |

### Practical Example 4

The FALEX Endurance Life was determined by the same method as in Practical Example 1, with the exception that in Practical Examples 4-1 and 4-2 the aqueous lubricating-film-forming agents were used with a phenol resin. The results are shown in Table 11.

**Table 11**

| Practical Examples | | 4-1 | 4-2 | |
|---|---|---|---|---|
| Resin (dry residue) | Epoxy resin | 15.8 | 20.8 | *5 |
| MoS₂ | | 22.8 | 22.8 | *3 |
| Antimony sulfide | Sb₂S₃ | 5.7 | 5.7 | |
| Water | | 18.38 | 17.47 | |
| Solvent | Ethanolamine | 1.8 | 1.8 | |
| Bentonite | | 0.3 | 0.3 | |
| Solid lubricant /resin | | 1.80 | 1.37 | *4 |
| MoS₂/ Antimony sulfide | | 1:0.23 | 1:0.23 | |
| FALEX Endurance Life (min) | | 430 | 400 | |

| | | | | |
|---|---|---|---|---|
| In Table 11: 3*: In Table 11, all components are given in parts by weight. | | | | |
| 4*: Weight ratio. | | | | |
| 5*: This solid component is diluted in a solvent. The amount of the solvent to be added is the weight of the solid component multiplied by 2.5. Sb₂S₃ is Sb₂S₃ grade 3 MoS₂ is MoS₂ MF. | | | | |

### Comparative Example

The FALEX Endurance Life was determined by the same method as in Practical Examples, with the exception that in Comparative Examples 1 through 9 the aqueous lubricating-film-forming agents were used with properties that did not satisfy the requirements specified for the aqueous lubricating-film-forming agents of the present invention. The results of the tests for Comparative Examples 1 through 6 are shown in Tables 12 through 17. As can be seen from Tables 12 through 17, comparison, e.g., between Practical Examples 1, 2 and Comparative Examples 8, 9 emphasizes the meaning of a weight ratio of solid lubricants to water-soluble resins. Furthermore, it can be seen from Comparative Example 7 that mere replacement of antimony sulfide with Sb₂O₃ is not sufficient for a satisfactory effect.

**Table 12**

| Comparative Examples | | 1 | 2 | 3 | |
|---|---|---|---|---|---|
| Resin (dry residue) | Epoxy resin | 14.0 | 14.0 | 14.0 | *1 |
| | Melamine resin | 2.1 | 2.1 | 2.1 | *2 |
| MoS₂ | | 15 | 5.0 | 24.0 | *3 |
| MoDTP | | - | - | - | |
| ZnS | | 5.0 | - | 2.7 | |
| Ca₃(PO₄)₂ | | 5.0 | - | - | |
| PTFE-2 | | 1.88 | - | 0.6 | |
| PTFE-1 | | - | 15.0 | - | |
| (1) | | - | - | 0.1 | |

**Table 13**

| Comparative Examples | 1 | 2 | 3 | |
|---|---|---|---|---|
| Sb₂O₃ | - | - | - | *3 |
| BN | - | - | - | |
| Water | 55.72 | 62.6 | 55.2 | |
| Solvent | 1.0 | 1.0 | 1.0 | |
| Bentonite | 0.3 | 0.3 | 0.3 | |
| Solid lubricant / resin | 1.67 | 1.24 | 1.70 | *4 |
| FALEX Endurance Life (min) | 118 | 10 | 65 | |

**Table 14**

| Comparative Examples | | 4 | 5 | 6 | |
|---|---|---|---|---|---|
| Resin (dry residue) | Epoxy resin | 14.0 | 14.0 | 14.0 | *1 |
| | Melamine resin | 2.1 | 2.1 | 2.1 | *2 |
| MoS₂ | | 9.5 | 9.5 | 24.0 | *3 |
| MoDTP | | - | 1.0 | - | |
| ZnS | | 2.5 | 2.5 | - | |
| Ca₃(PO₄)₂ | | - | - | - | |
| PTFE-2 | | - | | | |
| PTFE-1 | | - | | | |
| (1) | | - | | | |

**Table 15**

| Comparative Examples | 4 | 5 | 6 | |
|---|---|---|---|---|
| Sb₂O₃ | 12.5 | 12.5 | - | *3 |
| BN | - | - | 10.0 | |
| Water | 58.1 | 57.1 | 48.6 | |
| Solvent | 1.0 | 1.0 | 1.0 | |
| Bentonite | 0.3 | 0.3 | 0.3 | |
| Solid lubricant / resin | 1.52 | 1.58 | 2.11 | *4 |
| FALEX Endurance Life (min) | 186 | 163 | 36 | |

**Table 16**

| Comparative Examples | | 7 | 8 | |
|---|---|---|---|---|
| Resin (dry residue) | Epoxy resin | 14.0 | 26.58 | *1 |
| | Melamine resin | 2.1 | 4.51 | *2 |
| MoS₂ | | 24 | 12.35 | *3 |
| Antimony sulfide | Sb₂S₃ | - | 1.62 | |
| | Sb₂S₅ | - | - | |
| Water | | 43.5 | 36.7 | |
| Antimony oxide | Sb₂O₃ | 8.0 | 1.62 | |
| Solvent | Ethanolamine | 1.0 | 3.0 | |
| Bentonite (see note above!!!) | | 0.3 | 0.3 | |

**Table 17**

| Comparative Examples | 7 | 8 | |
|---|---|---|---|
| MoS₂/ Antimony sulfide | - | 1:0.13 | *4 |
| Solid lubricant /resin | 1.99 | 0.5 | |
| FALEX Endurance Life (min) | 200 | 140 | |
| In Tables 12 to 17: *1: This solid component is diluted in a solvent. The amount of the solvent to be added is the weight of the solid component multiplied by 1.43. | | | |
| *2: This solid component is diluted in a solvent. The amount of the solvent to be added is the weight of the solid component multiplied by 1.62. | | | |
| 3*: All components are given in parts by weight. | | | |
| 4*: Weight ratio. MoS₂ is MoS₂ MF. (1): Zinc 2-mercaptol imidazole | | | |

The starting materials which have been used in aforementioned Practical and Comparative Examples are described in more detail below: Epoxy resin (epoxy resin ester modified with linseed-oil and tung-oil) :
(RESYDROL WE 237L)
Melamine resin (non-plasticized melamine resin)
(RESYDROL WM 501)
MoS₂ MF : [MoS₂ , Microfine], CLIMAX Co.
MoS₂ SF : [MoS₂ , Superfine], CLIMAX Co.
Sb₂S₃ grade 3: Product of synthesis of GESCHAFTSBERRICH- CHEMI Co., DBPC GRADE 3
Sb₂S₃ grade 5: Product of synthesis GESCHAFTSBERRICH- CHEMI Co., DBPC GRADE 5
Sb₂S₃ N: natural product
Sb₂S_{5:} product of GESCHAFTSBEREICH-CHEMI Co
Sb₂O₃: product of LIEBAU CHEMIE HANDELSGESELSCHAFT GMBH.
[ANTIMONTRIOXIDE LCH/RS]
MoDTP: Molybdenum dithiophosphate
PTEF-1: Polytetrafluoroethylene powder
PTEF-2: Polytetrafluoroethylene dispersion

The invention is efficient in that it provides a coating agent which greatly reduces dissipation of organic solvents into environment and at the same time is capable of forming long-lasting lubricating films with perfect load-carrying capacity for use on sliding parts.

## Claims

1. An aqueous coating agent comprising:
a hydrophilic resin;
a solid lubricating agent comprising MoS₂ and at least one antimony sulfide selected from the group consisting of Sb₂S₃ and Sb₂S₅; wherein the weight ratio of MoS₂ to antimony sulfide is from 1:0.05 to 1:1.2; and
water;
wherein the weight ratio of the solid lubricating agent to the hydrophilic resin is from 0.7:1 to 3:1.

2. The aqueous coating agent of claim 1 wherein the weight ratio of MoS₂ to antimony sulfide is from 1:0.2 to 1:0.5.

3. The aqueous coating agent of claim 1 or 2 wherein said solid lubricating agent comprises both Sb₂S₃ and Sb₂S₅.

4. The aqueous coating agent of any of claims 1 to 3 wherein said solid lubricating agent further comprises antimony oxide.

5. The aqueous coating agent of claim 4 wherein the weight ratio of antimony oxide to antimony sulfide is from 1:0.5 to 1:5.0.

6. The aqueous coating agent of claim 5 wherein the weight ratio of antimony oxide to antimony sulfide is from 1:0.5 to 1:1.5.

7. The aqueous coating agent of any of claims 1 to 6 wherein the hydrophilic resin is an epoxy ester obtained by esterifying an epoxy resin with an aliphatic resin.

8. The aqueous coating agent of any of claims 1 to 7 further comprising a compatibility agent that improves compatibility between water and the hydrophilic resin.

9. The aqueous coating agent of claim 8 wherein the compatibility agent is selected from the group consisting of water soluble amines, NaOH and ethanolamine, and is preferably ethanolamine.

10. The aqueous coating agent of any of claims 1 to 9 wherein the weight ratio of the solid lubricating agent to the hydrophilic resin is from 0.9:1 to 2.5:1.

## Patentansprüche

1. Wäßriges Beschichtungsmittel, enthaltend:
ein hydrophiles Harz,
ein festes Schmiermittel, das MoS₂ enthält,
und mindestens ein Antimonsulfid, ausgewählt aus der Gruppe bestehend aus Sb₂S₃ und Sb₂S₅, wobei das Gewichtsverhältnis von MoS₂ zu Antimonsulfid von 1:0,05 bis 1:1,2 reicht, und
Wasser,
wobei das Gewichtsverhältnis des festen Schmiermittels zu dem hydrophilen Harz von 0,7:1 bis 3:1 reicht.

2. Wäßriges Beschichtungsmittel nach Anspruch 1, wobei das Gewichtsverhältnis von MoS₂ zu Antimonsulfid von 1:0,2 bis 1:0,5 reicht.

3. Wäßriges Beschichtungsmittel nach Anspruch 1 oder 2, worin das feste Schmiermittel sowohl Sb₂S₃ als auch Sb₂S₅ enthält.

4. Wäßriges Beschichtungsmittel nach einem der Ansprüche 1 bis 3, wobei das feste Schmiermittel weiterhin Antimonoxid enthält.

5. Wäßriges Beschichtungsmittel nach Anspruch 4, wobei das Gewichtsverhältnis von Antimonoxid zu Antimonsulfid von 1:0,5 bis 1:5 reicht.

6. Wäßriges Beschichtungsmittel nach Anspruch 5, wobei das Gewichtsverhältnis von Antimonoxid zu Antimonsulfid von 1:0,5 bis 1:1,5 reicht.

7. Wäßriges Beschichtungsmittel nach einem der Ansprüche 1 bis 6, wobei das hydrophile Harz ein Epoxyester ist, der durch Veresterung eines Epoxyharzes mit einem aliphatischen Harz erhalten wird.

8. Wäßriges Beschichtungsmittel nach einem der Ansprüche 1 bis 7, das weiterhin ein Kompatibilitätsmittel enthält, das die Verträglichkeit zwischen Wasser und dem hydrophilen Harz verbessert.

9. Wäßriges Beschichtungsmittel nach Anspruch 8, wobei das Kompatibilitätsmittel ausgewählt ist aus der Gruppe, die aus wasserlöslichen Aminen, NaOH und Ethanolamin besteht, und vorzugsweise Ethanolamin ist.

10. Wäßriges Beschichtungsmittel nach einem der Ansprüche 1 bis 9, wobei das Gewichtsverhältnis von festem Schmiermittel zu dem hydrophilen Harz von 0,9:1 bis 2,5:1 reicht.

## Revendications

1. Agent de revêtement aqueux, comprenant :
une résine hydrophile ;
un agent lubrifiant solide comprenant MoS₂ et au moins un sulfure d'antimoine choisi dans le groupe constitué par Sb₂S₃ et Sb₂S₅ ; dans lequel le rapport pondéral de MoS₂ au sulfure d'antimoine est de 1:0,05 à 1:1,2 ; et
de l'eau ;
dans lequel le rapport pondéral de l'agent lubrifiant solide à la résine hydrophile est de 0,7:1 à 3:1.

2. Agent de revêtement aqueux selon la revendication 1, dans lequel le rapport pondéral du MoS₂ au sulfure d'antimoine est de 1:0,2 à 1:0,5.

3. Agent de revêtement aqueux selon la revendication 1 ou 2, dans lequel ledit agent lubrifiant solide comprend à la fois Sb₂S₃ et Sb₂S₅.

4. Agent de revêtement aqueux selon l'une quelconque des revendications 1 à 3, dans lequel ledit agent lubrifiant solide comprend en outre de l'oxyde d'antimoine.

5. Agent de revêtement aqueux selon la revendication 4, dans lequel le rapport pondéral de l'oxyde d'antimoine au sulfure d'antimoine est de 1:0,5 à 1:5,0.

6. Agent de revêtement aqueux selon la revendication 5, dans lequel le rapport pondéral de l'oxyde d'antimoine au sulfure d'antimoine est de 1:0,5 à 1:1,5.

7. Agent de revêtement aqueux selon l'une quelconque des revendications 1 à 6, dans lequel la résine hydrophile est un ester d'époxy obtenu en estérifiant une résine époxy avec une résine aliphatique.

8. Agent de revêtement aqueux selon l'une quelconque des revendications 1 à 7, comprenant en outre un agent de compatibilité qui améliore la compatibilité entre l'eau et la résine hydrophile.

9. Agent de revêtement aqueux selon la revendication 8, dans lequel l'agent de compatibilité est choisi dans le groupe constitué par les amines hydrosolubles, NaOH et l'éthanolamine, et est de préférence l'éthanolamine.

10. Agent de revêtement aqueux selon l'une quelconque des revendications 1 à 9, dans lequel le rapport pondéral de l'agent lubrifiant solide à la résine hydrophile est de 0,9:1 à 2,5:1.
